# EUROPEAN PATENT SPECIFICATION

(11) **EP 3 570 134 B1**
(45) Date of publication and mention of the grant of the patent: **30.06.2021**
(21) Application number: 18173332.0
(22) Date of filing: 18.05.2018
(51) Int. Cl.: G05D 1/02, G01C 21/34, G08G 1/00, G01C 21/20, G08B 7/06

(54) **SYSTEM FOR EVACUATING ONE OR MORE MOBILE ROBOTS**
SYSTEM ZUM EVAKUIEREN EINES ODER MEHRERER MOBILEN ROBOTER
SYSTÈME D'ÉVACUATION D'UN OU DE PLUSIEURS ROBOTS MOBILES

(43) Date of publication of application: 20.11.2019
(73) Proprietor: Mobile Industrial Robots A/S, 5220 Odense SOE (DK)
(72) Inventor: JACOBSEN, Niels Jul, 5220 Odense SOE (DK)
(74) Representative: Fish & Richardson P.C.

(56) References cited:
- WO-A1-2018/051349
- JP-A- 2017 215 625
- US-A1- 2017 030 725
- US-A1- 2017 185 085
- US-A1- 2018 099 412
- GUO J H ET AL: "Programming of the Fire Escaping Paths Using Bayesian Estimated Algorithm", 2014 INTERNATIONAL SYMPOSIUM ON COMPUTER, CONSUMER AND CONTROL, IEEE, 10 June 2014 (2014-06-10), pages 1271-1274, XP032612781, DOI: 10.1109/IS3C.2014.328 [retrieved on 2014-06-27]

## Description

### FIELD OF THE INVENTION

The present invention relates to a system and method for evacuating one or more mobile robots from a confined area. Specifically the system and method involve one or more mobile robots equipped with sensors or receivers for receiving evacuation commands directing the one or more mobile robots to leave the evacuation area and enter a location outside the evacuation area.

### BACKGROUND OF THE INVENTION

In mobile industrial robot fleets situations occur where certain areas needs to be kept free of one or more mobile robots. Such situations can be fire alarms where the robots must leave areas of fire escape routes or areas around fire doors. Another situation is in hospitals where priority needs to be given for transport of patients in a narrow corridor and where the porter must be able to ensure that robots are not blocking the way during the transport of the patient. Another situation is in a warehouse where certain areas can be used by both robots and large trucks with limited visibility. Here it can also be necessary to evacuate the area for robots in times where the large trucks are entering the area.

Prior art systems typically solves the above mentioned situations by dividing the relevant physical area into sub areas which can all individually be set in two states; i) a state that allows robots to enter the area and ii) a state that does not allow the robots to enter the area. Each robot then check status of each area before it enters the area and only enters if the status allows this. If the status changes when a robot is inside an area the robots simply stops. Alternatively the robots use audio and visual signals when driving in restricted areas as to enhance identification of the presence of the robots.

There is a need to optimize access to limited resources for robots operating in the same space. The optimized access will allow the robots to move more efficiently within a common space as well as perform designated tasks more efficiently. In particular, the optimized access prioritizes the resource allocation to minimize aggregate time robots wait in order to obtain the resources needed to move or perform a task. To this end, there is a need to coordinate the resource allocation and reservation amongst robots. There is a further need to have the robots coordinate the resource allocation and reservation autonomously without human intervention so that the resources can be efficiently allocated in real-time. Accordingly, there is a need to supplement local navigational techniques with global navigational

techniques and independent and autonomous robot operation through coordinated resource allocation

US 2017/0030725 A1 describes a computer-implemented method, system, and/or computer program product that controls self-driving vehicles (SDVs). An emergency message is transmitted to a receiver within a self-driving vehicle (SDV). The emergency message describes an emergency state of an emergency vehicle and an identified future route of the emergency vehicle. In response to the SDV receiving the emergency message, the SDV is redirected, via an auto-control hardware system on the SDV, to a location and on a route that does not conflict with the identified future route of the emergency vehicle.

US 2017/0185085 A1 describes techniques for navigating semi-autonomous mobile robots. A semi-autonomous mobile robot moves within an environment to complete a task. A navigation server communicates with the robot and provides the robot information. The robot includes a navigation map of the environment, interaction information, and a security level. To complete the task, the robot transmits a route reservation request to the navigation server, the route reservation request including a priority for the task, a timeslot, and a route. The navigation server grants the route reservation if the task priority is higher than the task priorities of conflicting route reservation requests from other robots. As the robot moves within the environment, the robot detects an object and attempts to classify the detected object as belonging to an object category. The robot retrieves an interaction profile for the object, and interacts with the object according to the retrieved interaction profile.

US 2018/0099412 A1 describes devices, systems, and methods for social behavior of a telepresence robot. Upon determination that a person is involved in an emergency, a social path component of the robot may determine a path to cause the robot to move out of a high-traffic area, move out of the way of the person or object involved in an emergency, or the like. The robot may be configured to detect or receive an indication of the urgency of the approaching object. For example, the speed of an approaching gurney may be indicative of the urgency of the situation. The robot may be more sensitive to emergencies in an emergency department region. For example, the robot may be more likely to stop and wait at the side when people move by.

GUO J H ET AL: "Programming of the Fire Escaping Paths Using Bayesian Estimated Algorithm," 2014 INTERNATIONAL SYMPOSIUM ON COMPUTER, CONSUMER AND CONTROL, IEEE, 10 June 2014 describes a fire monitoring and escaping system that is applied in the intelligent home and uses mobile robots with flame sensor to detect fire sources. The supervised computer receives the locations of the detected fire sources and calculates the risk values of the cross points of the motion platform using joint probability. Then the supervised computer programs motion paths and escaping paths, and controls mobile robots to guide the human leaving the fire field. Mobile robots contain two types moving in the platform. One is the fire detection robot using ultraviolet sensor to search fire sources. The other represents the human walking in the motion platform autonomously.

JP 2017-215625 A describes a disaster prevention coordination system that includes a plurality of cleaning robots. For example, ,a facility is divided into four work areas A1 to A4 on the left, right, top, and bottom for the corridors and lounges that are common areas. Robots 36-1 to 36-4 are assigned to perform cleaning work automatically while traveling in the work areas A1 to A4.When an interface device receives a fire information signal from, a table interface displays a facility map indicating the fire target area on the table screen. The cleaning robots receive a safety confirmation instruction signal from the desktop interface device and stop the previous cleaning work and move around areas A1 to A4 according to a predetermined traveling pattern to detect smoke concentration. If the smoke concentration is detected by the concentration sensor 88 and the predetermined danger level has not been reached, a safety confirmation response signal indicating that it is a safe area is transmitted to the desktop interface device.

WO 2018/051349 A1 describes a system of robots that may interact together to detect safety concern conditions, and/or to take actions in response. In some embodiments, robots monitor facility locations during an already identified emergency condition to provide status data which may be used to suggest one or more target locations and/or access routes for emergency services personnel. In some embodiments, robots are activated to help address the emergency condition. For example, they take action to mitigate an emergency directly (for example, extinguish a fire), guide emergency personnel, and/or help ensure human safety.

### SUMMARY OF THE INVENTION

The invention is defined by the appended claims.

The present invention solves the above discussed problems by defining a number of individual evacuation zones and letting the robot management system receive evacuation alarms per individual zone and then as soon as this happens send command for robots to evacuate the specific zone as fast as possible. Either just evacuate to outside evacuation zone or to go to specific positions during the alarm.

Accordingly, in a first aspect of the present invention there is provided a system according to claim 1.

Embodiments are provided according to the dependent claims.

In a second aspect of the present invention there is provided a method according to claim 15.

### BRIEF DESCRIPTION OF THE DRAWINGS

Figure 1 shows a diagram of the modules applicable to the system of the present invention.
Figure 2 shows a map with zones and positions applicable to the system of the present invention.
Figure 3 shows flow diagram applicable to an evacuation procedure with the system of the present invention.

### DETAILED DESCRIPTION OF THE INVENTION

In the following detailed description, numerous details, examples, and embodiments are set forth and described. As one skilled in the art would understand in light of the present description, the system and is not limited to the embodiments set forth, and the system may be practiced without some of the specific details and examples discussed. Also, reference is made to accompanying figures, which illustrate specific embodiments in which autonomous coordination of robots can be practiced. It is to be understood that other embodiments can be used and structural changes can be made without departing from the scope of the embodiments herein described.

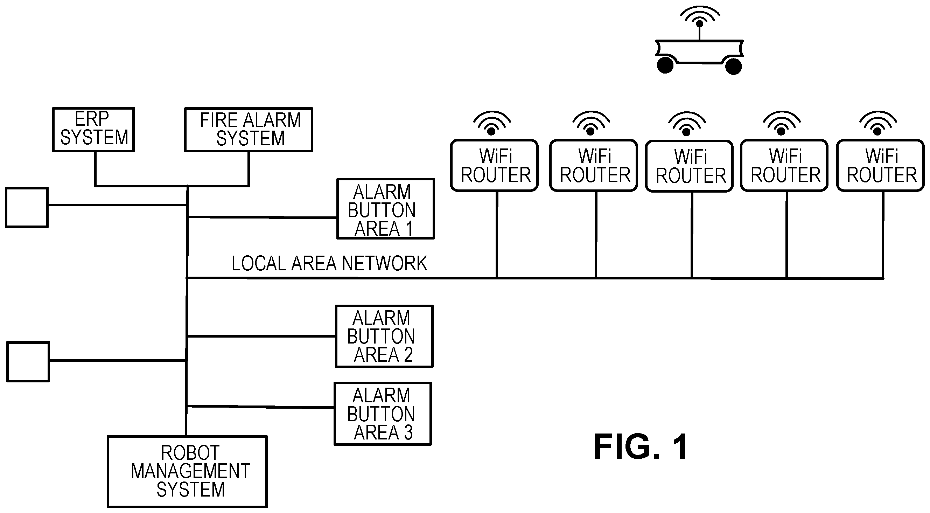

Referring to Figure 1 there is shown a local area network with different devices for communication. The local area network connects many different systems and devices which need communication between them. Hence it can be seen in the figure that the robot management system is integrated to the enterprise resource planning (ERP) system which handles sales orders, finance and logistic issues. It is also connected to the fire alarm system, the alarm buttons for the different physical areas which individually may require evacuation, and it is connected to the WIFI routers which connect to the mobile robots. This enables the robot management system to receive alarms from either physical buttons or via the ERP or fire alarm systems and send directions for evacuating specific areas to the mobile robots.

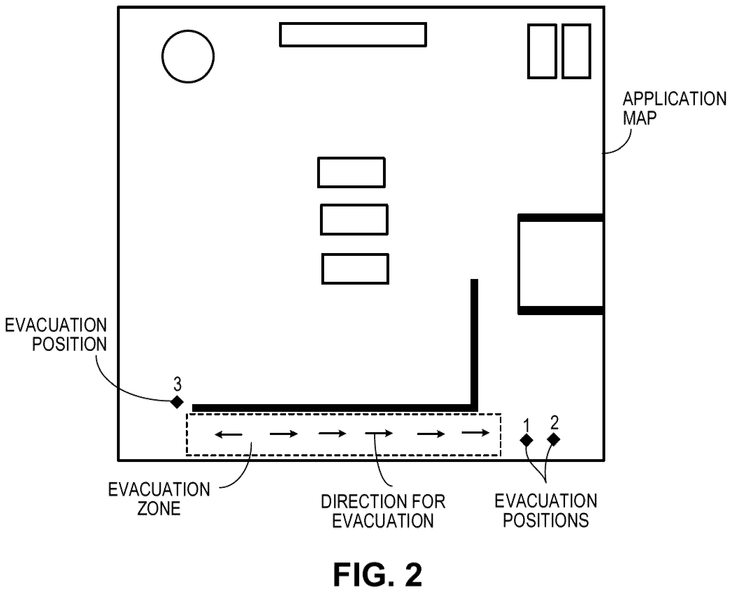

Referring to Figure 2 there is shows a map of a small physical area in which the mobile robots operate. In the map there is an evacuation zone and 3 evacuation positions. These positions are the positions to which the mobile robots move when evacuating the evacuation zone when an alarm is active. The evacuation zone is assigned with 2 different evacuation directions and this is indicated by the arrows named "Direction for evacuation". This means that when an evacuation alarm is raised the mobile robot will evacuate in different direction depending on its position inside the evacuation zone when the alarm is raised.

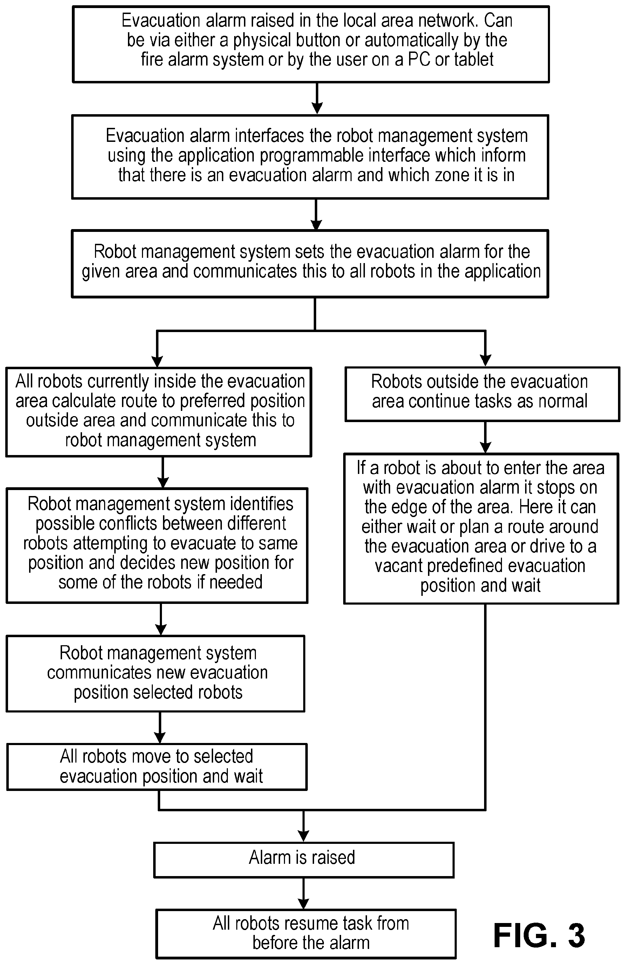

Referring to Figure 3 there is shown an event diagram illustrating a possible implementation of the logic for evacuation. In this example the robots inside the area that is to be evacuated calculate their preferred route to a position outside the evacuation area and communicates this planned route to the robot management system which will identify possible conflicts and direct some of the robots to alternative positions to solve the conflicts. In another implementation the robot management system dictates the route/direction and evacuation position and communicates this to all robots which all just follow the instructions for evacuation.

The system of the present invention is particularly useful for evacuation purposes in a factory, a warehouse, a hospital or a service/repair shop or similar. Within the scope of the invention one or more mobile robots are configured to transport components from A to B or to perform tasks at various positions in the area. A wireless communication system, such as Local Area Network with WiFi, Zigbee, Z-wave or similar, may be used to control the robots. Alternatively there is a network such as LORA, NB-loT or LTE.

The system also includes a robot management system which is a SW program that handles and prioritizes jobs of the fleet of robots. The robot management system communicates with all the robots in the area using the wireless communication system.

The robot management system has an application programmable Interface (API) through which other systems can interact with the robot management system. This can for instance be a physical alarm button that is connected to the wireless communication or it can be the fire alarm system that is also connected to the Local Area Network.

When an evacuation alarm is raised for a given area the robots can move out of the area in different ways. One way is to move to a specific position outside the area given for the robot. Another way is to leave to the nearest of a number of different evacuation positions outside the area. Another way is to leave the area moving in a specific direction and then locate the nearest evacuation position outside the area.

If multiple robots are being evacuated at the same time then they can move to the same position outside the area or they can move to different positions if each position can only be occupied by one robot. The combination can also exist where each robot finds the nearest or fastest route to an outside position but each position is only allowed to have one robot parked so the robot management system can communicate with each robot who calculates time or distance to different positions outside the area and sends this information back to the robot management system which decides which robot shall move to which position based on evaluation of the fastest way to evacuate the entire area and still only have one robot parked at each position.

## Claims

1. A system for evacuating mobile robots operating in one or more zones in a building, said system comprising:
mobile robots capable of receiving, using a sensor or receiver, one or more evacuation commands from a robot management system configured to control the mobile robots, wherein the one or more evacuation commands comprise information about one or more evacuation zones,
wherein the system is configured to define an evacuation action to be performed at the one or more evacuation zones, said evacuation action directs the mobile robots operating in the one or more evacuation zones to leave the one or more evacuation zones and enter evacuation positions outside the one or more evacuation zones and inside the building in response to the one or more evacuation commands,
wherein the evacuation positions are selected from the group consisting of dedicated parking lots for the mobile robots, specific compartments, and docking stations, **characterized in that** the mobile robots are configured to determine the shortest or fastest path out of the one or more evacuation zones and to the evacuation positions and communicate the determined path to the robot management system,
wherein the robot management system is configured to identify and resolve conflicts between mobile robots attempting to evacuate to the same evacuation position by communicating a new evacuation position to some of the mobile robots and directing the mobile robots to leave the one or more evacuation zones and enter the evacuation position.

2. The system according to claim 1, wherein the mobile robots are autonomous mobile robots.

3. The system according to claim 1, wherein the robot management system is located remote from the mobile robots.

4. The system according to claim 3, wherein the robot management system communicates with the mobile robots via a wireless communication.

5. The system according to any one of claims 1 to 4, wherein the robot management system is configured to process information from the mobile robots, said information comprising status on which of the mobile robots are inside or outside the one or more evacuation zones.

6. The system according to any one of claims 1 to 5, wherein the robot management system is configured to process commands from an external source, such as an actuator or an enterprise resource planning system, said commands comprising activation of alarms.

7. The system according to claim 1, wherein the mobile robots, based on the determined shortest or fastest path, execute an exit out of the one or more evacuation zones.

8. The system according to any one of the preceding claims, wherein the mobile robots are restricted from entering the one or more evacuation zones during a prescribed time.

9. The system according to claim 1, wherein the mobile robots are programmed to move to an alternative evacuation position if a specific evacuation position is occupied or if the path thereto has been obstructed.

10. The system according to any one of the preceding claims, wherein each of the one or more evacuation positions is specific to a given mobile robot.

11. The system according to any one of the preceding claims, wherein the mobile robots are configured to determine the closest evacuation position of a plurality of evacuation positions.

12. The system according to claim 11, wherein the mobile robots are configured to leave the one or more evacuation zones in a specific direction in response to the one or more evacuation commands and then determine the closest evacuation position of a plurality of evacuation positions.

13. The system according to any one of the preceding claims, wherein information obtained by the mobile robots during the evacuation is deleted upon completion of the evacuation thereby resetting the mobile robots to a situation before the evacuation.

14. The system according to any one of the preceding claims, wherein the one or more evacuation zones are selected from the group consisting of corridors, fire emergency zones, emergency exits, fire doors, and elevators.

15. A method for evacuating mobile robots controlled by a robot management system from specific zones in a building, said method comprising the steps of:
emitting, by the robot management system, one or more evacuation commands for mobile robots to evacuate from one or more evacuation zones;
receiving the one or more evacuation commands with sensors or receivers of the mobile robots; **characterized by**
determining, by each mobile robot, the shortest or fastest path out of the one or more evacuation zones and to evacuation positions outside the one or more evacuation zones and inside the building in response to the one or more evacuation commands, wherein the evacuation positions are selected from the group consisting of dedicated parking lots for the mobile robots, specific compartments, and docking stations;
communicating the determined path to the robot management system;
identifying, by the robot management system, conflicts between mobile robots attempting to evacuate to the same evacuation position by communicating a new evacuation position to some of the mobile robots; and
directing the mobile robots to leave the one or more evacuation zones and enter the evacuation position.

16. The method according to claim 15, wherein the robot management system is located remote from the une mobile robots.

## Patentansprüche

1. System zum Evakuieren von mobilen Robotern, die in einer oder mehreren Zonen in einem Gebäude betrieben werden, wobei das System Folgendes umfasst:
mobile Roboter, die unter Verwendung von einem Sensor oder Empfänger in der Lage sind, von einem Roboterverwaltungssystem, das dazu ausgelegt ist, die mobilen Roboter zu steuern, einen oder mehrere Evakuierungsbefehle zu empfangen,
wobei der eine oder die mehreren Evakuierungsbefehle Informationen über eine oder mehrere Evakuierungszonen umfassen,
wobei das System dazu ausgelegt ist, eine Evakuierungsmaßnahme zu definieren, die in der einen oder den mehreren Evakuierungszonen durchzuführen sind, wobei die Evakuierungsmaßnahme in Reaktion auf den einen oder die mehreren Evakuierungsbefehle die mobilen Roboter, die in der einen oder den mehreren Evakuierungszonen betrieben werden, anweist, die eine oder die mehreren Evakuierungszonen zu verlassen und in Evakuierungspositionen außerhalb der einen oder der mehreren Evakuierungszonen und im Gebäude einzutreten,
wobei die Evakuierungspositionen aus der Gruppe ausgewählt sind, die aus dedizierten Parkplätzen für die mobilen Roboter, speziellen Abteilungen und Andockstationen besteht,
**dadurch gekennzeichnet, dass** die mobilen Roboter dazu ausgelegt sind, den kürzesten oder schnellsten Pfad aus der einen oder den mehreren Evakuierungszonen und zu den Evakuierungspositionen zu bestimmen und den bestimmten Pfad zum Roboterverwaltungssystem zu kommunizieren,
wobei das Roboterverwaltungssystem dazu ausgelegt ist, durch Kommunizieren einer neuen Evakuierungsposition zu einigen der mobilen Roboter und Anweisen der mobilen Roboter, die eine oder die mehreren Evakuierungszonen zu verlassen und in die Evakuierungsposition einzutreten, Konflikte zwischen mobilen Robotern, die versuchen, zur selben Evakuierungsposition zu evakuieren, zu identifizieren und zu lösen.

2. System nach Anspruch 1, wobei die mobilen Roboter autonome mobile Roboter sind.

3. System nach Anspruch 1, wobei sich das Roboterverwaltungssystem von den mobilen Robotern entfernt befindet.

4. System nach Anspruch 3, wobei das Roboterverwaltungssystem mit den mobilen Robotern via eine drahtlose Kommunikation kommuniziert.

5. System nach einem der Ansprüche 1 bis 4, wobei das Roboterverwaltungssystem dazu ausgelegt ist, Informationen von den mobilen Robotern zu verarbeiten, wobei die Informationen einen Status dazu umfassen, welche der mobilen Roboter sich innerhalb oder außerhalb der einen oder der mehreren Evakuierungszonen befinden.

6. System nach einem der Ansprüche 1 bis 5, wobei das Roboterverwaltungssystem dazu ausgelegt ist, Befehle von einer externen Quelle zu verarbeiten, wie etwa einem Aktuator oder einem Unternehmensressourcenplanungssystem, wobei die Befehle Aktivierungen von Alarmen umfassen.

7. System nach Anspruch 1, wobei die mobilen Roboter auf Basis des bestimmten kürzesten oder schnellsten Pfads einen Austritt aus der einen oder den mehreren Evakuierungszonen ausführen.

8. System nach einem der vorhergehenden Ansprüche, wobei die mobilen Roboter während einer vorgeschriebenen Zeit nicht in die eine oder die mehreren Evakuierungszonen eintreten dürfen.

9. System nach Anspruch 1, wobei die mobilen Roboter programmiert sind, sich zu einer alternativen Evakuierungsposition zu bewegen, wenn eine spezielle Evakuierungsposition belegt ist oder wenn der Pfad dorthin blockiert wurde.

10. System nach einem der vorhergehenden Ansprüche, wobei sich jede der einen oder der mehreren Evakuierungspositionen speziell auf einen gegebenen mobilen Roboter bezieht.

11. System nach einem der vorhergehenden Ansprüche, wobei die mobilen Roboter dazu ausgelegt sind, die nächste Evakuierungsposition einer Vielzahl von Evakuierungspositionen zu bestimmen.

12. System nach Anspruch 11, wobei die mobilen Roboter dazu ausgelegt sind, in Reaktion auf den einen oder die mehreren Evakuierungsbefehle die eine oder die mehreren Evakuierungszonen in eine spezielle Richtung zu verlassen und dann die nächste Evakuierungsposition einer Vielzahl von Evakuierungspositionen zu bestimmen.

13. System nach einem der vorhergehenden Ansprüche, wobei Informationen, die während der Evakuierung von den mobilen Robotern erhalten werden, nach Abschluss der Evakuierung gelöscht werden, wodurch die mobilen Roboter auf eine Situation vor der Evakuierung zurückgesetzt werden.

14. System nach einem der vorhergehenden Ansprüche, wobei die eine oder die mehreren Evakuierungszonen aus der Gruppe ausgewählt sind, die aus Korridoren, Brandschutzzonen, Notausgängen, Brandschutztüren und Aufzügen besteht.

15. Verfahren zum Evakuieren von mobilen Robotern, die von einem Roboterverwaltungssystem gesteuert werden, aus speziellen Zonen in einem Gebäude, wobei das Verfahren die folgenden Schritte umfasst:
Ausgeben von einem oder mehreren Evakuierungsbefehlen zum Evakuieren von mobilen Robotern aus einer oder mehreren Evakuierungszonen durch das Roboterverwaltungssystem;
Empfangen des einen oder der mehreren Evakuierungsbefehle mit Sensoren oder Empfängern der mobilen Roboter;
**gekennzeichnet durch**
Bestimmen des kürzesten oder schnellsten Pfads aus der einen oder den mehreren Evakuierungszonen und zu Evakuierungspositionen außerhalb der einen oder der mehreren Evakuierungszonen und im Gebäude durch jeden mobilen Roboter in Reaktion auf den einen oder die mehreren Evakuierungsbefehle, wobei die Evakuierungspositionen aus der Gruppe ausgewählt sind, die aus dedizierten Parkplätzen für die mobilen Roboter, speziellen Abteilungen und Andockstationen besteht;
Kommunizieren des bestimmten Pfads zum Roboterverwaltungssystem;
Identifizieren von Konflikten zwischen mobilen Robotern, die versuchen, zur selben Evakuierungsposition zu evakuieren, durch das Roboterverwaltungssystem durch Kommunizieren einer neuen Evakuierungsposition zu einigen der mobilen
Roboter und Anweisen der mobilen Roboter, die eine oder die mehreren
Evakuierungszonen zu verlassen und in die Evakuierungsposition einzutreten.

16. Verfahren nach Anspruch 15, wobei sich das Roboterverwaltungssystem von den mobilen Robotern entfernt befindet.

## Revendications

1. Système d'évacuation de robots mobiles fonctionnant dans une ou plusieurs zones d'un bâtiment, ledit système comportant :
des robots mobiles capables de recevoir, à l'aide d'un capteur ou d'un récepteur, une ou plusieurs consignes d'évacuation en provenance d'un système de gestion de robots configuré pour commander les robots mobiles,
la ou les consignes d'évacuation comportant des informations concernant une ou plusieurs zones d'évacuation,
le système étant configuré pour définir une action d'évacuation à effectuer dans la ou les zones d'évacuation, ladite action d'évacuation enjoignant aux robots mobiles fonctionnant dans la ou les zones d'évacuation de quitter la ou les zones d'évacuation et d'entrer dans des positions d'évacuation à l'extérieur de la ou des zones d'évacuation et à l'intérieur du bâtiment en réponse à la ou aux consignes d'évacuation,
les positions d'évacuation étant sélectionnées dans le groupe constitué d'aires de stationnement dédiées pour les robots mobiles, de compartiments spécifiques, et de stations d'accueil, **caractérisé en ce que** les robots mobiles sont configurés pour déterminer le chemin le plus court ou le plus rapide pour sortir de la ou des zones d'évacuation et atteindre les positions d'évacuation et communiquer le chemin déterminé au système de gestion de robots,
le système de gestion de robots étant configuré pour identifier et résoudre des conflits entre des robots mobiles tentant d'évacuer vers la même position d'évacuation en communiquant une nouvelle position d'évacuation à certains des robots mobiles et en enjoignant aux robots mobiles de quitter la ou les zones d'évacuation et d'entrer dans la position d'évacuation.

2. Système selon la revendication 1, les robots mobiles étant des robots mobiles autonomes.

3. Système selon la revendication 1, le système de gestion de robots étant situé à distance des robots mobiles.

4. Système selon la revendication 3, le système de gestion de robots communiquant avec les robots mobiles via une communication sans fil.

5. Système selon l'une quelconque des revendications 1 à 4, le système de gestion de robots étant configuré pour traiter des informations provenant des robots mobiles, lesdites informations comportant une situation indiquant lesquels des robots mobiles sont à l'intérieur ou à l'extérieur de la ou des zones d'évacuation.

6. Système selon l'une quelconque des revendications 1 à 5, le système de gestion de robots étant configuré pour traiter des consignes provenant d'une source externe, comme un actionneur ou un système de gestion intégrée, lesdites consignes comportant l'activation d'alarmes.

7. Système selon la revendication 1, les robots mobiles, d'après le chemin le plus court ou le plus rapide déterminé, exécutant une sortie de la ou des zones d'évacuation.

8. Système selon l'une quelconque des revendications précédentes, les robots mobiles étant empêchés d'entrer dans la ou les zones d'évacuation pendant un temps prescrit.

9. Système selon la revendication 1, les robots mobiles étant programmés pour se déplacer jusqu'à une position d'évacuation de substitution si une position d'évacuation spécifique est occupée ou si le chemin jusqu'à celle-ci a été obstrué.

10. Système selon l'une quelconque des revendications précédentes, la ou chacune des positions d'évacuation étant spécifique à un robot mobile donné.

11. Système selon l'une quelconque des revendications précédentes, les robots mobiles étant configurés pour déterminer la position d'évacuation la plus proche parmi une pluralité de positions d'évacuation.

12. Système selon la revendication 11, les robots mobiles étant configurés pour quitter la ou les zones d'évacuation dans une direction spécifique en réponse à la ou aux consignes d'évacuation, puis déterminer la position d'évacuation la plus proche parmi une pluralité de positions d'évacuation.

13. Système selon l'une quelconque des revendications précédentes, des informations obtenues par les robots mobiles pendant l'évacuation étant supprimées suite à l'achèvement de l'évacuation, ramenant ainsi les robots mobiles à une situation avant l'évacuation.

14. Système selon l'une quelconque des revendications précédentes, la ou les zones d'évacuation étant sélectionnées dans le groupe constitué de couloirs, de zones de secours d'incendie, de sorties de secours, de portes coupe-feu, et d'ascenseurs.

15. Procédé d'évacuation de robots mobiles, commandés par un système de gestion de robots, de zones spécifiques dans un bâtiment, ledit procédé comportant les étapes consistant à :
faire émettre, par le système de gestion de robots, une ou plusieurs consignes d'évacuation pour que des robots mobiles évacuent une ou plusieurs zones d'évacuation ;
recevoir la ou les consignes d'évacuation à l'aide de capteurs ou de récepteurs des robots mobiles ;
**caractérisé par** les étapes consistant à
faire déterminer, par chaque robot mobile, le chemin le plus court ou le plus rapide pour sortir de la ou des zones d'évacuation et atteindre des positions d'évacuation à l'extérieur de la ou des zones d'évacuation et à l'intérieur du bâtiment en réponse à la ou aux consignes d'évacuation, les positions d'évacuation étant sélectionnées dans le groupe constitué d'aires de stationnement dédiées pour les robots mobiles, de compartiments spécifiques, et de stations d'accueil ;
communiquer le chemin déterminé au système de gestion de robots ;
faire identifier, par le système de gestion de robots, des conflits entre des robots mobiles tentant d'évacuer vers la même position d'évacuation en communiquant une nouvelle position d'évacuation à certains des robots mobiles ; et
enjoindre aux robots mobiles de quitter la ou les zones d'évacuation et d'entrer dans la position d'évacuation.

16. Procédé selon la revendication 15, le système de gestion de robots étant situé à distance des robots mobiles.
